(19) Europäisches Patentamt
European Patent Office
Office européen des brevets

(11) EP 0 665 875 B1

(12) **EUROPÄISCHE PATENTSCHRIFT**

(45) Veröffentlichungstag und Bekanntmachung des Hinweises auf die Patenterteilung:
**11.06.1997 Patentblatt 1997/24**

(21) Anmeldenummer: **93923472.0**

(22) Anmeldetag: **15.10.1993**

(51) Int Cl.6: **C11D 3/37**, C08F 289/00

(86) Internationale Anmeldenummer:
**PCT/EP93/02851**

(87) Internationale Veröffentlichungsnummer:
**WO 94/10281 (11.05.1994 Gazette 1994/11)**

(54) **VERWENDUNG VON VINYLPYRROLIDON- UND VINYLIMIDAZOL-COPOLYMERISATEN ALS WASCHMITTELADDITIV SOWIE DEREN HERSTELLUNGSVERFAHREN**

USE OF VINYLPYRROLIDONE AND VINYLIMIDAZOLE COPOLYMERS AS WASHING AGENT ADDITIVES AND PROCESS FOR PRODUCING THE SAME

UTILISATION DE COPOLYMERISATS DE VINYLPYRROLIDONE ET DE VINYLIMIDAZOLE COMME PRODUITS D'ADDITION AUX DETERGENTS, AINSI QUE LEUR PROCEDE DE PREPARATION

(84) Benannte Vertragsstaaten:
**AT BE CH DE DK ES FR GB IE IT LI NL PT SE**

(30) Priorität: **23.10.1992 DE 4235798**

(43) Veröffentlichungstag der Anmeldung:
**09.08.1995 Patentblatt 1995/32**

(73) Patentinhaber: **BASF Aktiengesellschaft**
**67063 Ludwigshafen (DE)**

(72) Erfinder:
- **DETERING, Juergen**
  **D-67113 Limburgerhof (DE)**
- **SCHADE, Christian**
  **D-67061 Ludwigshafen (DE)**
- **TRIESELT, Wolfgang**
  **D-67063 Ludwigshafen (DE)**
- **TROPSCH, Juergen**
  **D-67122 Altrip (DE)**

(56) Entgegenhaltungen:
**EP-A- 0 013 585** **EP-A- 0 021 379**
**EP-A- 0 337 354** **EP-A- 0 457 205**
**WO-A-90/01920** **DE-A- 2 814 287**

- **TENSIDE SURFACTANTS DETERGENTS Bd. 28, Nr. 6, November 1991, MüNCHEN, DE Seiten 428 - 433 H. JÄGER ET AL 'Wirkungsweise von Polymeren mit farbübertragungsinhibierenden Eigenschaften'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 665 875 B1

**Beschreibung**

Die Erfindung betrifft die Verwendung von Copolymerisaten von 1-Vinylpyrrolidon und 1-Vinylimidazol mit stickstoffhaltigen basischen ethylenisch ungesättigten Monomeren in Form der freien, Basen, der Salze mit organischen oder anorganischen Säuren oder in quarternierter Form als Zusatz zu Waschmitteln zur Inhibierung der Farbstoffübertragung während des Waschvorgangs, neue Polymerisate von Vinylpyrrolidon, Vinylimidazol und Vinylimidazoliumverbindungen, Verfahren zu ihrer Herstellung und ihre Verwendung in Waschmitteln.

Aus der DE-3-22 32 353 sind Wasch- und Reinigungsmittelmischungen bekannt, die im wesentlichen aus 95 bis 60 Gew.-% nichtionischen Detergentien und 5 bis 40 Gew.-% eines teilweise oder vollständig wasserlöslichen Polyvinylpyrrolidons bestehen und im wesentlichen von anionischen oberflächenaktiven Mitteln frei sind. Die Polymerisate des Vinylpyrrolidons verhindern beim Waschvorgang den Farbstoffübergang von gefärbten auf weiße Textilien. Die Polymerisate des Vinylpyrrolidons haben Molekulargewichte in dem Bereich von etwa 10 000 bis etwa 1 000 000. Es kommen sowohl Homopolymerisate als auch Copolymerisate des Vinylpyrrolidons in Betracht. Als geeignete Comonomere werden Acrylnitril oder Maleinsäureanhydrid genannt. Die Wirksamkeit der Vinylpyrrolidonpolymerisate als Farbübertragungsinhibitor wird jedoch von anionischen Tensiden stark beeinträchtigt.

Aus der DE-A-28 14 287 sind Wasch- und Reinigungsmittel bekannt, die anionische und/oder nichtionische Tenside, Gerüstsubstanzen und sonstige übliche Waschmittelzusätze sowie als verfärbungsinhibierende Additive 0,1 bis 10 Gew.-% an wasserlöslichen bzw. wasserdispergierbaren Homo- bzw. Copolymerisaten des N-Vinylimidazols enthalten. Die Polymeren haben in 1 gew.-%iger Wäßriger Lösung bei 20°C eine spezifische Viskosität von 0,01 bis 5.

Anlage

Aus Tenside 28, Seiten 428 bis 433 (1991) ist bekannt, Polyvinylimidazol, Polyvinylpyrrolidon und Copolymerisate aus Vinylpyrrolidon und Acrylamid oder Vinylimidazol und Acrylamid als Farbübertragungsinhibitor in der Waschflotte beim Waschen von textilen Materialien zu verwenden.

Aus der WO-A-90/01920 sind beispielsweise Copolymerisate bekannt, die Vinylpyrrolidon und quaternisierte basische Monomere, wie Dimethylaminopropylacrylamid, einpolymerisiert enthalten. Die Polymeren werden in kosmetischen Formulierungen, wie Haarsprays oder Hautpflegemittel, verwendet.

Die EP-A-0 337 354 betrifft Haarwaschmittel, die beispielsweise Alkylpolyglucoside als oberflächenaktives Mittel und ein kationisches Polymer enthalten. Als kationische Polymere kommen beispielsweise Copolymerisate aus Diallylammoniumsalzen und Acrylamid oder quaternisiertes Polyvinylpyrrolidon in Betracht.

Aus der EP-A-0 013 585 sind Geschirrspülmittel bekannt, die ein anionisches oberflächenaktives Mittel, ein nichtionisches oberflächenaktives Mittel oder deren Mischungen, ein Copolymerisat aus N-Vinylpyrrolidon und Dimethylaminoethylmethacrylat und ein Alkalimetallsalz von Casein enthalten.

Aus der EP-A-0 457 205 ist die Verwendung von wasserlöslichen oder wasserdispergierbaren gepfropften Proteinen, die erhältlich sind durch radikalisch initiierte Copolymerisation von monoethylenisch ungesättigten Monomeren in Gegenwart von Proteinen, als Zusatz zu Wasch- und Reinigungsmitteln bekannt. Die gepfropften Proteine verbessern das Primär- und Sekundärwaschvermögen sowie die Soil-Release-Eigenschaften von phosphatfreien und phosphatarmen Wasch- und Reinigungsmittelformulierungen.

Die oben angegebenen Polymeren haben mit Ausnahme der in der EP-A-0 457 205 beschriebenen gepfropften Proteine den Nachteil, daß sie weder biologisch abbaubar noch durch Adsorption am Klärschlamm aus dem Abwasser entfernt werden können.

Der vorliegenden erfindung liegt die Aufgabe zugrunde, einen Waschmittelzusatz zur Verfügung zu stellen, der eine Farbstoffübertragung während des Waschvorgangs verhindert und der zu-mindest durch adsorption am Klärschlamm aus dem Abwasser eliminierbar ist.

Die Aufgabe wird erfindungsgemäß gelöst durch Verwendung von Copolymerisaten, die durch radikalisch initiierte Copolymerisation von Monomergemischen aus

(a) 60-99 Gew.-% 1-Vinylpyrrolidon, 1-Vinylimidazol oder deren Mischungen,

(b) 1-40 Gew.-% N,N'-Dialkylaminoalkyl (meth) acrylate, N,N'-Dialkylaminoalkyl (meth) acrylamide, 4-Vinylpyridin, 2-Vinylpyridin und/oder Diallyldialkylamine jeweils in Form der freien Basen als Salz oder in quaternierter Form und/oder 1-Vinylimidazoliumverbindungen der Formel

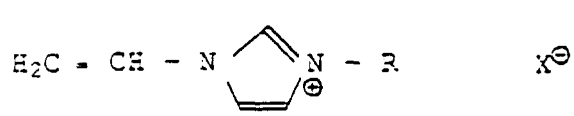 (I)

in der R = $C_1$- bis $C_{18}$-Alkyl oder Benzyl und $X^{\ominus}$ ein Anion ist und gegebenenfalls

(c) bis zu 20 Gew.-% anderen monoethylenisch ungesättigten Monomeren

erhältlich sind, als Zusatz zu Waschmitteln zur Inhibierung der Farbstoffübertragung während des Waschvorgangs. Die Aufgabe wird außerdem gelöst mit Polymerisaten, die erhältlich sind durch radikalisch initiierte Polymerisation von

(a) 1-Vinylpyrrolidon, 1-Vinylimidazol, 1-Vinylimidazoliumverbindungen der Formel

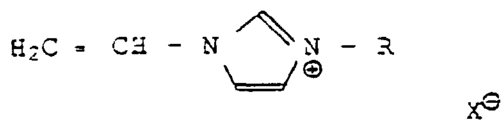

(I),

in der

R = H, $C_1$-bis $C_{18}$-Alkyl oder Benzyl und
$X^{\ominus}$ ein Anion bedeuten,

oder deren Mischungen, und

(b) anderen stickstoffhaltigen, basischen ethylenisch ungesättigten Monomeren in Form der freien Basen, der Salze mit organischen oder anorganischen Säuren oder in quaternierter Form und/oder

(c) anderen monoethylenisch ungesättigten Monomeren, die mit den Monomeren (a) und (b) copolymerisierbar sind,

in wäßrigem Medium in Gegenwart von wasserlöslichen Proteinen oder teilweise abgebauten Proteinen, wobei man auf 100 Gewichtsteile der bei der Polymerisation eingesetzten Monomeren 0,5 bis 400 Gewichtsteile der Proteine einsetzt.

Die Polymerisate werden dadurch hergestellt, daß man die Monomeren (a), und (b) und/oder (c) in wässrigem Medium in Gegenwart von wasserlöslichen Proteinen oder teilweise abgebauten Proteinen in Gegenwart von Radikale bildenden Initiatoren polymerisiert, wobei man pro 100 Gewichtsteile der Monomeren 0,5 bis 400 Gew.-Teile der Proteine einsetzt. Die so erhältlichen Polymerisate werden als Zusatz zu Waschmitteln zur Inhibierung der Farbstoffübertragung während des Waschvorgangs verwendet.

Die oben beschriebenen Polymerisate werden überraschenderweise am Klärschlamm aus dem Abwasser adsorbiert. Sie sind zum Teil sogar biologisch abbaubar.

Die Copolymerisate, die erfindungsgemäß als Waschmitteladditiv verwendet werden, werden durch Copolymerisation von Monomergemischen hergestellt, die als Komponente (a) 1-Vinylpyrrolidon, 1-Vinylimidazol oder Mischungen der beiden genannten Monomeren in beliebigem Verhältnis enthalten. Die Monomeren der Gruppe (a) sind zu 60-99, vorzugsweise 80 bis 95 Gew.-% in der Monomermischung enthalten.

Als Komponente (b) der Monomermischung kommen stickstoffhaltige, basische ethylenisch ungesättigte Monomere in Form der freien Basen, der Salze mit organischen oder anorganischen Säuren oder in quaternierter Form in Betracht. Geeignete stickstoffhaltige, basische ethylenisch ungesättigte Verbindungen sind beispielsweise N, N'-Dialkylaminoalkyl(meth)acrylate, z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat, Dimethylaminobutylmethacrylat, Dimethylaminoneopentylacrylat, Dimethylaminoneopentylmethacrylat. Weitere geeignete basische Monomere dieser Gruppe sind N, N'-Dialkylaminoalkyl(meth) acrylamide, z.B. N,N'-Di-C1-bis C3-Alkylamino--C2-C6-Alkyl (meth)acrylamide, wie Dimethylaminoethylacrylamid, Dimethylaminoethylmethacrylamid, Diethylaminoethylacrylamid, Diethylaminoethylmethacrylamid, Dipropylaminoethylacrylamid, Dipropylaminoethylmethacrylamid, Dimethylaminopropylacrylamid, Dimethylaminopropylmethacrylamid, Diethylaminopropylacrylamid, Diethylaminopropylmethacrylamid, Dimethylaminoneopentylacrylamid, Dimethylaminoneopentylmethacrylamid und Dialkylaminobutylacrylamid. Weitere geeignete Monomere dieser Gruppe sind 4-Vinylpyridin, 2-Vinylpyridin und/oder Diallyl(di)alkylamine, bei denen die Alkylgruppe 1 bis 12 C-Atome aufweist. Die oben genannten basischen Monomeren werden bei der Copolymerisation in Form der freien Basen, der Salze mit organischen oder anorganischen Säuren oder in quaternierter Form eingesetzt. Zur Salzbildung eignen sich beispielsweise Carbonsäuren mit 1 bis 7 Kohlenstoffatomen, z.B. Ameisensäure, Essigsäure oder Propionsäure, Benzolsulfonsäure, p-Toluolsulfonsäure oder anorganische Säuren wie Halogenwasserstoffsäuren, beispielsweise Salzsäure oder Bromwasserstoffsäure. Die oben beispielhaft genannten basischen Monomeren können auch in quaternierter Form eingesetzt werden. Zur Quaternierung eignen sich beispielsweise Alkylhalogenide mit 1 bis 18 C-Atomen in der Alkylgruppe, z.B. Methylchlorid, Methylbromid, Methyljodid, Ethylchlorid, Propylchlorid, Hexylchlorid, Dodecylchlorid, Laurylchlorid und Benzylhalogenide, insbesondere Benzylchlorid und Benzylbromid. Die Quaternierung der stickstoffhaltigen basischen Monomeren kann auch durch Umsetzung dieser Verbindungen mit Dialkylsulfaten, insbesondere Diethylsulfat oder Dimethylsulfat, vorgenommen werden. Beispiele für quaternierte Monomere dieser Gruppe sind Trimethylammoniumethylmethacrylatchlorid, Dimethylethylammoniumethylmethacrylatethylsulfat und Dimethylethylammoniumethylmethacrylamidethylsulfat. Weitere geeignete Monomere der Gruppe (b) sind 1-Vinylimidazoliumverbindungen der Formel

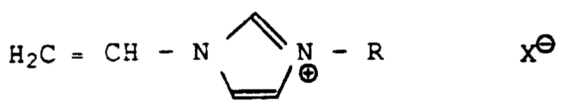

(I),

in der R = H, $C_1$-bis $C_{18}$-Alkyl oder Benzyl und $X^{\ominus}$ ein Anion ist.

Das Anion kann ein Halogenion oder auch der Rest einer anorganischen oder organischen Säure sein. Beispiele für quaternierte 1-Vinylimidazole der Formel I sind 3-Methyl-l-vinylimidazoliumchlorid, 3-Benzyl-1-Vinyl-imidazoliumchlorid, 3-n-Dodecyl-1-vinylimidazoliumbromid und 3-n-Octadecyl-1-vinylimidazoliumchlorid. Die Monomeren der Gruppe (b) können allein oder in Mischung untereinander mit den Monomeren der Gruppe (a) copolymerisiert werden. Sie werden bei der Copclymerisation in Mengen von 1 bis 40, vorzugsweise 5 bis 20 Gew.-% eingesetzt.

Die Monomeren der Gruppe (b) können jedoch auch in Form der freien Basen bei der Copolymerisation eingesetzt werden. Die so erhältlichen Copolymerisate können dann gegebenenfalls durch Umsetzung mit üblichen Quaternierungsmitteln, wie beispielsweise Methylchlorid oder Benzylchlorid, quaterniert oder durch Behandlung mit Säuren in die Salzform überführt werden. Selbstverständlich können auch die Polymerisate, die 1-Vinylimidazol (Gruppe (a)) einpolymerisiert enthalten, durch Umsetzung mit üblichen Quaternierungsmitteln, wie beispielsweise Methylchlorid oder Dimethylsulfat, quaterniert werden.

Bei der Copolymerisation der Monomeren (a) und (b) können gegebenenfalls (c) bis zu 20 Gew.-% andere monoethylenisch ungesättigte Monomere anwesend sein, die mit den Monomeren (a) und (b) copolymerisierbar sind. Geeignete Monomere dieser Gruppe sind beispielsweise Vinylacetat, Vinylpropionat, Vinylbutyrat, Acrylnitril, Methacrylnitril, Acrylamid, Methacrylamid, $C_1$- bis $C_8$- Alkyl(meth)acrylat, Styrol und $C_1$-bis $C_8$-Hydroxyalkyl(meth)acrylate.

Falls die Monomeren der Gruppe (c) bei der Copolymerisation mitverwendet werden, können sie entweder allein oder in Mischung untereinander eingesetzt werden.

Die Monomeren der Gruppe (c) werden lediglich zur Modifizierung der Copolymerisate aus den Monomeren (a) und (b) eingesetzt. Falls sie mitverwendet werden, beträgt ihr Anteil in dem Monomergemisch vorzugsweise 5 bis 15 Gew.-%.

Man erhält neue Polymerisate, wenn man die Polymerisation von

(a) 1-Vinylpyrrolidon, 1-Vinylimidazol, 1-Vinylimidazoliumverbindungen der oben angegebenen Formel I oder deren Mischungen und

(b) anderen stickstoffhaltigen basischen ethylenisch ungesättigten Monomeren in Form der freien Basen, der Salze mit organischen oder anorganischen Säuren oder in quaternierter Form und/oder

(c) anderen ethylenisch ungesättigten Monomeren, die mit den Monomeren (a) und (b) copolymerisierbar sind,

in wäßrigem Medium in Gegenwart von wasserlöslichen Proteinen oder teilweise abgebauten Proteinen vornimmt. Auf 100 Gew.-Teile der bei der Polymerisation eingesetzten Monomeren verwendet man bei der Polymerisation 0,5 bis 400 Gewichtsteile der Proteine. Die Monomeren der Gruppe (b) wurden bereits bei der Beschreibung der Copolymerisate genannt. Die Verbindungen der Formel I werden bei der Herstellung der neuen Polymerisate aus der Gruppe (b) ausgenommen und der Monomergruppe (a) zugeordnet. Die Homo-bzw. Copolymerisation der oben angegebenen Gruppen von Monomeren werden in Gegenwart von wasserlöslichen Proteinen oder teilweise abgebauten Proteinen in wäßrigem Medium durchgeführt. Als Proteine können alle pflanzlichen oder tierischen Proteine oder Mikroorganismen-Proteine oder entsprechend modifizierte Proteine verwendet werden, sofern sie wasserlöslich sind. Im Gegensatz zu den meist gut wasserlöslichen globulären Proteinen ist die Wasserlöslichkeit bei den Sklero- oder Faserproteinen

(Keratin, Elastin, Fibroin und Kollagen) in der Regel nicht gegeben. Diese Proteine können jedoch zumindest teilweise abgebaut werden, so daß sie wasserlöslich werden. Diese Proteine können beispielsweise mit Hilfe enzymatischer, saurer oder alkalischer Hydrolyse partiell abgebaut werden. Von den Skleroproteinpartialhydrolysaten werden bevorzugt solche auf Kollagenbasis eingesetzt. Auf 100 Gewichtsteile der bei der Polymerisation eingesetzten Monomeren verwendet man 0,5 bis 400, vorzugsweise 10 bis 200 Gewichtsteile der wasserlöslichen Proteine oder der in eine wasserlösliche Form überführten, teilweise abgebauten Proteine.

Die Homo- und Copolymerisate werden dadurch hergestellt, daß man die Monomeren (a) und (b) und/oder (c) im wäßrigem Medium in Gegenwart von wasserlöslichen Proteinen oder teilweise abgebauten Proteinen in Gegenwart von Radikale bildenden Initiatoren polymerisiert, wobei pro 100 Gewichtsteile der Monomeren 0,5 bis 400 Gewichtsteile der wasserlöslichen Proteine einsetzt. Als Radikale bildende Initiatoren kommen alle üblichen Peroxy- und Azoverbindungen in Betracht, z.B. Peroxide, Hydroperoxide, und Peroxyester; z.B. Wasserstoffperoxid, Dibenzoylperoxid, Di-t-butylperoxid, t-Butylhydroperoxid, t-Butylperpivalat und t-Butyl-peroxy-2-ethylhexanoat, sowie Azoverbindungen, beispielsweise 2,2'-Azobis(2-amidinopropan) dihydrochlorid, 2,2'-Azobis (2-methylbutyronitril), und 2,2'-Azobis [2-(2-imidazolin-2-yl) propan] dihydrochlorid. Man kann selbstverständlich auch Initiatormischungen oder die bekannten Redoxinitiatoren verwenden. Die Polymerisationstemperatur liegt vorzugsweise in dem Temperaturbereich von 60 bis 100°C. Selbstverständlich kann man auch außerhalb des angegebenen Temperaturbereiches polymerisieren, wobei man bei höheren Temperaturen, z.B. bei 120 bis 140°C die Polymerisation in druckdicht verschlossenen Apparaturen oder in einem hochsiedenden Lösemittel durchführt. Die Initiatoren werden in den üblichen Mengen eingesetzt, d.h. in Mengen von beispielsweise 0,2 bis 5 Gewichtsprozent, bezogen auf die zu polymerisierenden Monomeren. Als Monomere der Gruppe (b) werden im Fall der Herstellung der neuen Copolymerisate vorzugsweise N,N'-Dialkylaminoalkyl(meth)acrylate und/oder N-N'-Dialkylaminoalkyl(meth)-acrylamide eingesetzt. Der K-Wert der Polymerisate liegt in dem Bereich von 10 bis 350 (bestimmt nach H. Fikentscher in 1 %iger wäßriger Lösung bei einer Temperatur von 25°C und pH 7).

Die oben beschriebenen Copolymerisate sowie die neuen Homo- und Copolymerisate, die in Gegenwart von wasserlöslichen Proteinen hergestellt werden, werden als Zusatz zu Waschmitteln zur Inhibierung der Farbstoffübertragung während des Waschvorgangs verwendet. Die Waschmittel können pulverförmig sein oder auch in flüssiger Einstellung vorliegen.

Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, andere Farbübertragungsinhibitoren, Vergrauungsinhibitoren und/oder Bleichaktivatoren.

Waschmittel auf der Basis von Tensiden und gegebenenfalls Buildern sowie anderen üblichen Bestandteilen enthalten erfindungsgemäß 0,1 bis 10 Gew.-% an Copolymerisaten, die durch radikalisch initiierte Copolymerisation von Monomergemischen aus

(a) 60 bis 99 Gew.-% 1-Vinylpyrrolidon, 1-Vinylimidazol oder deren Mischungen,

(b) 1 bis 40 Gew.-% stickstoffhaltigen, basischen ethylenisch ungesättigten Monomeren in Form der freien Basen, der Salze mit organischen oder anorganischen Säuren oder in quaternierter Form und gegebenenfalls

(c) bis zu 20 Gew-% anderen monoethylenisch ungesättigten Monomeren

erhältlich sind. Die Copolymerisate wirken beim Waschen von gefärbten Textilien als Farbübertragungsinhibitor.

Die Prozentangaben in den Beispielen sind Gewichtsprozent. Die K-Werte wurden nach H. Fikentscher, Cellulose-Chemie, Band 13, 58-64 und 71-74, (1932), in wäßriger Lösung bei 25°C und einer Polymerkonzentration von 1 Gewichtsprozent und pH 7 bestimmt. Sofern die Bestimmung des K-Werts bei einer anderen Konzentration oder in einem anderen Lösemittel durchgeführt wurde, so ist dies bei den einzelnen Polymerisaten angegeben.

Herstellung der Polymerisate

Beispiele

Polymer 1

Ein Gemisch aus 63 g 1-Vinylpyrrolidon (VP), 7 g N,N'-Dimethylaminopropylacrylamid (DMAPMA), 0,7 g 2,2'-Azobis(2-amidinopropan)dihydrochlorid und 200 g Wasser wurde mit verdünnter Salzsäure auf einen pH-Wert von 8 eingestellt und unter Rühren und Stickstoffbegasung auf 70°C erhitzt. Nach Erreichen dieser Temperatur wurden Zulauf 1 (Gemisch aus 162 g VP, 18 g DMAPMA und 250 g Wasser, mit Salzsäure auf pH 8 eingestellt) in 5 h und Zulauf 2 (1,8 g 2,2'-Azobis(2-amidinopropan)dihydrochlorid in 65 g Wasser) in 6 h zudosiert. Das Reaktionsgemisch wurde weitere 2 h bei 70°C gerührt und anschließend mit 400 g Wasser verdünnt. Man erhielt eine klare Polymerlösung. Das Polymer besaß einen K-Wert von 90,2.

Polymer 2

Ein Gemisch aus 228 g VP, 12 g N,N'-Dimethylaminoethylmethacrylat (DMAEMA), 3,2 g 2,2'-Azobis(2-methylbutyronitril) und 660 g Wasser wurde im Stickstoffstrom auf 75°C erhitzt. Anschließend wurden Zulauf 1 (456 g VP und 24 g DMAEMA in 870 g Wasser) in 3 h und Zulauf 2 (6,4 g 2,2'-Azobis(2-methylbutyronitril) in 100 g Ethanol) in 4 h zudosiert. Nach beendeter Dosierung wurde eine Lösung von 4,8 g 2,2'-Azobis(2-methylbutyronitril) in 50 g Ethanol zugegeben und das Reaktionsgemisch 1 h bei 85°C gerührt. Man erhielt eine klare viskose Polymerlösung. Das Polymer besaß einen K-Wert von 85.

Polymer 3

In einer Rührapparatur wurde ein Gemisch aus 160 g 1-Vinylpyrrolidon, 40 g 4-Vinylpyridin und 650 g Wasser vorgelegt und unter Stickstoffbegasung auf 70°C erhitzt. Das Reaktionsgemisch wurde mit 3,0 g 2,2'-Azobis(2-amidinopropan)dihydrochlorid versetzt und 3 h bei 70°C gerührt. Anschließend wurden 1,0 g 2,2'-Azobis(2-amidinopropan) dihydrochlorid zugegeben und 3 h bei 70°C nachpolymerisiert. Man erhielt eine milchigweiße Polymerdispersion, die bei Zugabe von verdünnter Salzsäure oder Ethanol wasserklar wurde. Der K-Wert des Polymers betrug 45,4.

Polymer 4

In einer Rührapparatur wurden 78.2 g 1-Vinylpyrrolidon (VP), 30,5 g mit Diethylsulfat quaterniertes N,N'-Dimethylaminopropylmethacrylamid (DMAPMA x DES), 0,3 g 2,2'-Azobis(2-amidinopropan)dihydrochlorid und 915 ml Wasser vorgelegt und im Stickstoffstrom auf 65°C erhitzt. Nach Erreichen dieser Temperatur wurden Zulauf 1 (Gemisch aus 165 g VP, 62,4 g DMAPMA x DES und 400 g Wasser) in 4 h und Zulauf 2 (2,2'-Azobis(2-amidinopropan)dihydrochlorid in 25 ml Wasser) in 6 h zudosiert. Anschließend wurde 2 h bei 65°C gerührt. Man erhielt eine klare viskose Polymerlösung. Der K-Wert des Polymers betrug 315 (0,1%ig in Wasser).

Polymer 5

In einer Rührapparatur wurde ein Gemisch aus 154 g VP, 56 g mit Diethylsulfat quaterniertes N,N'-Dimethylaminoethylmethacrylat (DMAEMA x DES), 0,44 g 2,2'-Azobis (2-amidinopropan)dihydrochlorid und 294 g Wasser im Stickstoffstrom auf 60°C erhitzt. Nach Erreichen dieser Temperatur wurden Zulauf 1 (462 g VP und 168 g DMAEMA x DES in 945 g Wasser) in 3 h und Zulauf 2 (3,94 g 2,2'-Azobis (2-amidinopropan)dihydrochlorid in 32 g Wasser) in 6 h zudosiert. Anschließend wurde 2 h bei 60°C gerührt. Man erhielt eine klare, schwachgelbe viskose Flüssigkeit. Das Polymer besaß einen K-Wert von 280 (0,1 %ig in Wasser). Zur Senkung des Restmonomerengehaltes wurde die Polymerlösung nach Verdünnung mit Wasser mit Schwefelsäure versetzt, zur Farbverbesserung nach Neutralisation mit $H_2O_2$ gebleicht. Der K-Wert nahm um 70 Einheiten ab.

Polymer 6

Ein Gemisch aus 228 g VP, 15 g Trimethylammoniumethylmethacrylatchlorid (DMAEMA x MeCl), 3,2 g 2,2'-Azobis (2-methylbutyronitril) und 660 g Ethanol wurde im Stickstoffstrom auf 75°C erhitzt. Anschließend wurden Zulauf 1 (456 g VP und 30 g DMAEMA x MeCl in 870 g Ethanol) in 3 h und Zulauf 2 (6,4 g 2,2'-Azobis (2-methylbutyronitril) in 100 g Ethanol) in 4 h zudosiert. Nach beendeter Dosierung wurde eine Lösung von 4,8 g 2,2'-Azobis (2-methylbutyronitril) in 50 g Ethanol zugegeben und das Reaktionsgemisch 1 h bei 75°C gerührt. Das so erhaltene Polymer besaß einen

K-Wert von 54,7.

Polymer 7

In einer Rührapparatur wurden 83,3 g 1-Vinylpyrrolidon (VP), 17,4 g N,N'-Dimethylaminopropylacrylamid (DMAPMA), 0,32 g 2,2'-Azobis (2-amidinopropan)dihydrochlorid und 900 ml Wasser vorgelegt und unter Stickstoff auf 85°C erhitzt. 30 min nach Erreichen dieser Temperatur wurden Zulauf 1 (148.2 g VP, 30.9 g DMAPMA und 500 ml Wasser) in 4 h und Zulauf 2 (0,58 g 2,2'-Azobis(2-amidinopropan) dihydrochlorid in 25 ml Wasser) in 6 h zudosiert. Anschließend wurde 2 h bei 85°C gerührt. Die so erhaltene Polymerlösung (K-Wert des Polymers: 121, 1%ig in Wasser) wurde bei 50°C innerhalb von 45 min mit 32,8 g Dimethylsulfat versetzt. Das Reaktionsgemisch wurde 30 min bei 50°C und 2 h bei 70°C gerührt. Der K-Wert des quaternierten Polymers betrug 151.

Polymer 8

In einer Rührapparatur wurde ein Gemisch aus 17 g VP, 2 g 3-Methyl-1-vinylimidazoliumchlorid (VI x MeCl), 0,04 g Mercaptoethanol, 0,1 g 2,2'-Azobis(2-amidinopropan)dihydrochlorid und 185 g Wasser vorgelegt und unter Stickstoffbegasung auf 65°C erwärmt. Nach Erreichen dieser Temperatur wurden Zulauf 1 (163 g VP, 19 g VI x MeCl und 0,36 g Mercaptoethanol in 60 g Wasser) in 5 h und Zulauf 2 (1,3 g 2,2'-Azobis(2-amidinopropan)dihydrochlorid in 30 g Wasser) in 6 h zudosiert. Anschließend wurde 2 h bei 65°C gerührt und die viskose hellgelbe Polymerlösung einer Wasserdampfdestillation unterworfen. Der K-Wert des Polymers betrug 61,4.

Polymer 9

Ein Gemisch aus 450 g VP, 50 g mit n-Octadecylchlorid quaterniertes 1-Vinylimidazol und 400 g Ethanol wurden vorgelegt und unter Rühren und Stickstoffbegasung auf 70°C erhitzt. Nach Erreichen von 70°C wurde Zulauf 1 (10,5 g 2,2'-Azobis(2-methylbutyronitril) in 100 g Ethanol) in 3 h zu dem Reaktionsgemisch getropft. Nach weiteren 5 h Rühren bei 70°C erfolgte die Zugabe von 1,5 g 2,2'-Azobis(2-methylbutyronitril). Die Nachpolymerisationszeit betrug 15 h. Man erhielt eine hellgelbe viskose Polymerlösung. Das Polymer besaß einen K-Wert von 72,0 (1 %ig in Ethanol).

Polymer 10

In einer Rührapparatur wurde ein Gemisch aus 125 g VP, 125 g 1-Vinylimidazol (VI) und 600 g Wasser vorgelegt und unter Stickstoff auf 70°C erhitzt. Nach Erreichen dieser Temperatur wurde eine Lösung von 6 g 2,2'-Azobis[2-(2-imidazolin-2-yl)propan]dihydrochlorid in 30 ml Wasser zugegeben und das Reaktionsgemisch 4 h bei 70°C gerührt. Die Nachpolymerisation (3 h bei 70°C) erfolgte durch zweimalige Zugabe einer Lösung von 1 g 2,2'-Azobis[2-(2-imidazolin-2-yl)propan]dihydrochlorid in 10 ml Wasser. Man erhielt eine gelbe viskose Polymerlösung. Der K-Wert des Polymers betrug 41,8. Zur Quaternisierung wurden 100 g der Polymerlösung mit 1,4 g Dimethylsulfat versetzt. Das Reaktionsgemisch wurde 2 h bei 50°C und 1 h bei 70°C gerührt.

Polymer 11

In einer Rührapparatur wurden 150 g 1-Vinylpyrrolidon, 75 g 1-Vinylimidazol, 25 g mit Diethylsulfat quaterniertes N,N'-Dimethylaminoethylmethacrylat (DMAEA x DES) und 625 g Wasser vorgelegt und unter Stickstoff auf 70°C erhitzt. Bei 65°C erfolgte die Zugabe einer Lösung von 5,0 g 2,2'-Azobis(2-amidinopropan)dihydrochlorid in 30 g Wasser. Das Reaktionsgemisch wurde 3 h bei 70°C gerührt, anschließend mit einer Lösung von 1,0 g 2,2'-Azobis(2-amidinopropan) dihydrochlorid in 20 g Wasser versetzt und weitere 3 h bei 70°C gerührt. Man erhielt eine schwach gelbbraune viskose Lösung. Der K-Wert des Polymers betrug 83,2.

Polymer 12

In einer Rührapparatur wurden 112,5 g 1-Vinylpyrrolidon, 100 g 1-Vinylimidazol, 12,5 g 3-Methyl-1-vinylimidazoliumchlorid, 25 g Ethylacrylat und 600 g Wasser vorgelegt und im Stickstoffstrom auf 70°C erhitzt. Bei 65°C erfolgte die Zugabe einer Lösung von 5,0 g 2,2'-Azobis(2-amidinopropan)dihydrochlorid in 30 g Wasser. Das Reaktionsgemisch wurde 3 h bei 70°C gerührt, anschließend mit einer Lösung von 1,0 g 2,2'-Azobis(2-amidinopropan)dihydrochlorid in 20 g Wasser versetzt und weitere 3 h bei 70°C gerührt. Man erhielt eine schwach gelbbraune viskose Lösung. Der K-Wert des Polymers betrug 71,7.

Polymer 13

Ein Gemisch aus 190 g 1-Vinylpyrrolidon, 10 g Diallyldimethylammoniumchlorid, 650 g Wasser und 2,0 g 2,2'-Azobis(2-amidinopropan)dihydrochlorid wurde in einer Rührapparatur vorgelegt und im Stickstoffstrom auf 65°C erwärmt. Das Reaktionsgemisch wurde 4 h bei dieser Temperatur gerührt, anschließend mit 1,0 g 2,2'-Azobis(2-amidinopropan)dihydrochlorid versetzt und weitere 3 h bei 90°C gerührt. Man erhielt eine farblose klare Polymerlösung. Das Polymer besaß einen K-Wert von 73,4.

Polymer 14 (nicht erfindungsgemäß)

In einer Rührapparatur wurden 178 g Wasser, 142,5 g eines Kollagenhydrolysates (Gelita Sol-D, Deutsche Gelatine-Fabriken Stoess & Co. GmbH) und 35,5 g 1-Vinylimidazol (VI) vorgelegt und im Stickstoffstrom unter Zugabe von 0,4 g t-Butylperoxy-2-ethylhexanoat auf 85°C erhitzt. Nach Erreichen dieser Temperatur wurden Zulauf 1 (107 g VI, 75 g Wasser) in 140 min und Zulauf 2 (1,9 g t-Butylperoxy-2-ethylhexanoat, 19 g Ethanol) in 155 min zudosiert. Man verdünnte das Reaktionsgemisch mit 100 g Wasser, heizte auf 90°C und tropfte anschließend Zulauf 3 (2,2 g t-Butylperoxy-2-ethylhexanoat, 9,5 g Ethanol) in 5-10 min zu. Der Ansatz wurde weitere 2 h bei 90°C gerührt und dann einer Wasserdampfdestillation unterworfen. Man erhielt eine wasserklare Polymerlösung. Der K-Wert des Polymers betrug 33,3.

Polymer 15

In einer Rührapparatur wurde ein Gemisch aus 20 g eines Kollagenhydrolysates (Gelita Sol-D, Deutsche Gelatine-Fabriken Stoess & Co. GmbH), 15 g 1-Vinylpyrrolidon, 15 g 1-Vinylimidazol und 130 g Wasser vorgelegt und im Stickstoffstrom unter Zugabe von 0,75 g t-Butylperoxy-2-ethylhexanoat auf 85°C erhitzt. Nach Erreichen dieser Temperatur wurden Zulauf 1 (100 g Gelita Sol-D, 75 g VP, 75 g VI, 650 g Wasser) in 3 h und Zulauf 2 (3,75 g t-Butylperoxy-2-ethylhexanoat in 40 g Ethanol) in 3,5 h zudosiert. Anschließend wurde Zulauf 3 (1,5 g t-Butylperoxy-2-ethylhexanoat in 10 g Ethanol) in 10 min zugetropft und das Reaktionsgemisch bei 90°C weitere 2,5 h gerührt. Man erhielt eine leicht trübe, gelbbraune viskose Polymerlösung. Der K-Wert des Polymers betrug 44,1.

Polymer 16

In einer Rührapparatur wurde ein Gemisch aus 15 g eines Kollagenhydrolysates (Collagel A, Deutsche Gelatine-Fabriken Stoess & Co. GmbH) 30 g 1-Vinylimidazol, 5,0 g 3-Methyl-1-vinylimidazoliumchlorid und 130 g Wasser vorgelegt und im Stickstoffstrom unter Zugabe von 0,75 g 2,2'-Azobis(2-amidinopropan)dihydrochlorid auf 65°C erhitzt. Nach Erreichen dieser Temperatur wurden Zulauf 1 (75 g Collagel A, 150 g VI, 25 g 3-Methyl-1-vinylimidazoliumchlorid, 650 g Wasser) in 3 h und Zulauf 2 (3,75 g 2,2'-Azobis(2-amidinopropan)dihydrochlorid in 40 g Wasser) in 3,5 h zudosiert. Anschließend wurde Zulauf 3 (1,5 g 2,2'-Azobis(2-amidinopropan)dihydrochlorid in 20 g Wasser) in 15 min zugetropft und das Reaktionsgemisch bei 75°C weitere 2,5 h gerührt. Man erhielt eine gelbbraune schwach trübe Polymerlösung. Der K-Wert des Polymers betrug 51,8.

Anwendungstechnische Beispiele

Waschversuche

Zur Prüfung der Wirksamkeit wurde weißes Prüfgewebe gemeinsam mit eingefärbten Textilproben aus Baumwolle im Launderometer gewaschen. Die Messung der aufgetretenen Farbstoffübertragung erfolgte photometrisch. Aus den an den einzelnen Prüfgeweben gemessenen Remissionswerten wurden die jeweiligen Farbstärken bestimmt, aus denen sich die Wirksamkeit der Polymeren ableiten läßt. Eine Wirksamkeit von 100 % bedeutet, daß das Testgewebe seine ursprüngliche Farbstärke beibehielt, es also nicht angefärbt wurde. Eine Wirksamkeit von 0 % wird bei einem Prüfgewebe ermittelt, das die gleiche Farbstärke aufweist wie ein Prüflappen, der ohne Zusatz eines farbstoffübertragungsverhindernden Additivs gewaschen wurde.

Die Textilproben wurden mit folgenden Farbstoffen gefärbt:

C.I. Direkt Schwarz 51 (constitution number 27720), C.I. Direkt Blau 218 (24401), C.I. Direkt Rot 79 (29065), C.I. Direkt Schwarz 22 (35435), C.I. Direkt Blau 71 (34140), C.I. Reaktiv Schwarz 5 (20505)

| Waschbedingungen | |
| --- | --- |
| Waschgerät | Launderometer |

(fortgesetzt)

| Waschbedingungen | |
|---|---|
| Waschzyklen | 1 |
| Temperatur | 60°C |
| Waschdauer | 30 min |
| Wasserhärte | 3 mmol $Ca^{2+}$, $Mg^{2+}$ (4:1)/1 |
| Prüfgewebe | Baumwolle |
| Flottenverhältnis | 1 : 50 |
| Flottenmenge | 250 ml |
| Waschmittelkonzentration | 7,0 g/l |

| Waschmittelzusammensetzung [%] | |
|---|---|
| Zeolith A | 20 |
| Natriumcarbonat | 11 |
| lin. Dodecylbenzolsulfonat | 5 |
| Seife | 1,3 |
| $C_{13}/C_{15}$ - Oxoalkohol x 7 Ethylenoxid-Einheiten | 3,9 |
| Acrylsäure/Maleinsäure-Copolymerisat 70/30, Na-Salz, MG = 70000 | 2,7 |
| Na-Carboxymethylcellulose | 0,4 |
| Wasser | 7,0 |
| Polymer gemäß Tabelle | 1,0 |
| Natriumsulfat | auf 100 |

Polymer 0 Polyvinylpyrrolidon, K-Wert 30 (1 %ig in $H_2O$), Standardpolymer zum Vergleich. Polymere dieser Art sind als Farbübertragungsinhibitor in handelsüblichen Waschmitteln enthalten.

Tabelle

| | Wirksamkeit [%] | | | | | | | | | | | | | | | | |
|---|---|---|---|---|---|---|---|---|---|---|---|---|---|---|---|---|---|
| Polymer | 0 | 1 | 2 | 3 | 4 | 5 | 6 | 7 | 8 | 9 | 10 | 11 | 12 | 13 | 14 | 15 | 16 |
| Direkt Schwarz 51 | 35 | 32 | 30 | 30 | 42 | 33 | 40 | 39 | 31 | 25 | 45 | 31 | 33 | 32 | 25 | 41 | 39 |
| Direkt Blau 218 | 38 | 35 | 35 | 41 | 43 | 39 | 45 | 40 | 47 | 23 | 99 | 43 | 40 | 35 | 99 | 95 | 89 |
| Direkt Rot 79 | 83 | 81 | 79 | 80 | 85 | 80 | 85 | 82 | 77 | 73 | 90 | 80 | 80 | 78 | 87 | 90 | 87 |
| Direkt Schwarz 22 | 81 | 78 | 81 | 76 | 80 | 79 | 81 | 85 | 83 | 71 | 93 | 82 | 80 | 80 | 89 | 90 | 85 |
| Direkt Blau 71 | 98 | 96 | 96 | 95 | 98 | 97 | 98 | 97 | 97 | 96 | 99 | 98 | 96 | 95 | 98 | 98 | 97 |
| Reaktiv Schwarz 5 | 17 | 14 | 17 | 15 | 20 | 13 | 16 | 15 | 13 | 10 | 69 | 40 | 31 | 17 | 51 | 55 | 49 |

Die Ergebnisse zeigen, daß die Polymeren 1 bis 16 nicht nur an die Wirkung von Polyvinylpyrrolidon heranreichen, sondern sie teilweise sogar übertreffen (14 nicht erfindungsgemäßes Polymer).

Adsorptionstest

Geprüft wird das Adsorptionsverhalten der Polymere am Belebtschlamm einer biologischen Kläranlage. Das Polymer wird in einer wäßrigen Belebtschlammsuspension gelöst. Die Konzentration des Polymers beträgt mindestens 100 mg/l, bezogen auf den gelösten organisch gebundenen Kohlenstoff (DOC). Die Belebtschlannkonzentration beträgt 1 g/l, bezogen auf das Trockengewicht. Nach 48 h wird der DOC nach Absetzen des Schlammes in der überstehenden Lösung gemessen. Feine Belebtschlammpartikel werden vor der DOC-Messung entfernt.

$$\text{Eliminationsgrad in \%} = \frac{\text{DOC (Ausgangswert) - DOC (Endwert)}}{\text{DOC (Ausgangswert)}} \times 100$$

| | Eliminationsgrad in % |
|---|---|
| Polymer 0 | < 5 |
| Polymer 5 | 67 |
| Polymer 8 | 68 |
| Polymer 9 | 69 |

Während Polyvinylpyrrolidon nicht am Belebtschlamm adsorbiert wird, beträgt der Eliminationsgrad der Polymere 5,8 und 9 annähernd 70 %. Bei den in Gegenwart von wasserlöslichen Proteinen oder Proteinhydrolysaten hergestellten Polymeren ist außerdem zumindest eine Teilabbaubarkeit gegeben (Zahn-Wellens-Test).

## Patentansprüche

**1.** Verwendung von Copolymerisaten, die durch radikalisch initiierte Copolymerisation von Monomergemischen aus

(a) 60 bis 99 Gew.-% 1-Vinylpyrrolidon, 1-Vinylimidazol oder deren Mischungen,

(b) 1 bis 40 Gew.-% N,N'-Dialkylaminoalkyl (meth) acrylate, N,N'-Dialkylaminoalkyl (meth) acrylamide, 4-Vinylpyridin, 2-Vinylpyridin und/oder Diallyldialkylamine jeweils in Form der freien Basen als Salz oder in quaternierter Form und/oder 1-Vinylimidazoliumverbindungen der Formel

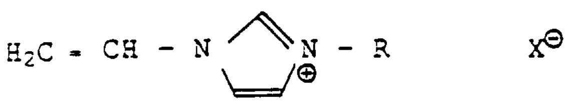

(I) ,

in der R = $C_1$- bis $C_{18}$-Alkyl oder Benzyl und $X^{\ominus}$ ein Anion ist und gegebenenfalls

(c) bis zu 20 Gew.-% anderen monoethylenisch ungesättigten Monomeren

erhältlich sind, als Zusatz zu Waschmitteln zur Inhibierung der Farbstoffübertragung während des Waschvorgangs.

**2.** Polymerisate, die erhältlich sind durch radikalisch initiierte Polymerisation von

(a) 1-Vinylpyrrolidon, 1-Vinylimidazol, 1-Vinylimidazoliumverbindungen der Formel

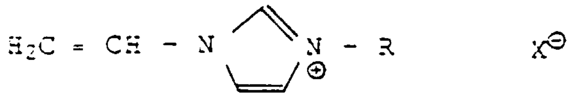

(I),

in der

R = H, $C_1$-bis $C_{18}$-Alkyl oder Benzyl und
$X^{\ominus}$ ein Anion bedeuten, oder deren Mischungen, und

(b) anderen stickstoffhaltigen, basischen ethylenisch ungesättigten Monomeren in Form der freien Basen, der Salze mit organischen oder anorganischen Säuren oder in quaternierter Form und/oder

(c) anderen monoethylenisch ungesättigten Monomeren, die mit den Monomeren (a) und (b) copolymerisierbar sind,

in wäßrigem Medium in Gegenwart von wasserlöslichen Proteinen oder teilweise abgebauten Proteinen, wobei man auf 100 Gewichtsteile der bei der Polymerisation eingesetzten Monomeren 0,5 bis 400 Gewichtsteile der Proteine einsetzt.

**3.** Verfahren zur Herstellung der Polymerisate nach Anspruch 2, dadurch gekennzeichnet, daß man die Monomeren

(a) 1-Vinylpyrrolidon, 1-Vinylimidazol, 1-Vinylimidazoliumverbindungen der Formel

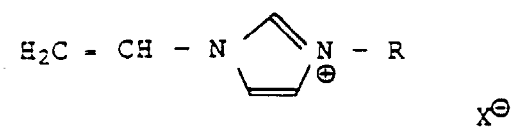

(I),

in der

R = H, $C_1$- bis $C_{18}$-Alkyl oder Benzyl und
$X^{\ominus}$ ein Anion bedeuten,

oder deren Mischungen, und

(b) andere stickstoffhaltige, basische ethylenisch ungesättigte Monomere in Form der freien Basen, der Salze mit organischen oder anorganischen Säuren oder in quaternierter Form und/oder

(c) anderen monoethylenisch ungesättigte Monomere, die mit den Monomeren (a) und (b) copolymerisierbar sind,

in wäßrigem Medium in Gegenwart von wasserlöslichen Proteinen oder teilweise abgebauten Proteinen in Gegenwart von Radikalen bildenden Initiatoren polymerisiert, wobei man pro 100 Gewichtsteile der Monomeren 0,5 bis 400 Gewischtsteile der Proteine einsetzt.

**4.** Verfahren nach Anspruch 3, dadurch gekennzeichnet, daß man als Monomere (b) N,N'-Dialkylaminoalkyl (meth) acrylate und/oder N,N'-Dialkylaminoalkyl(meth)acrylamide einsetzt.

**5.** Verwendung der Polymerisate nach Anspruch 2 als Zusatz zu Waschmitteln zur Inhibierung der Farbstoffübertragung während des Waschvorgangs.

**6.** Waschmittel auf der Basis von Tensiden und gegebenenfalls Buildern sowie anderen üblichen Bestadteilen, dadurch gekennzeichnet, daß sie 0,1 bis 10 Gew.-% an Copolymerisaten enthalten, die durch radikalisch initiierte Copolymerisation von Monomergemischen aus

(a) 50 bis 99 Gew.-% 1-Vinylpyrrolidon, 1-Vinylimidazol oder deren Mischungen,

(b) 1 bis 40 Gew.-% stickstoffhaltigen, basischen ethylenisch ungesättigten Monomeren in Form der freien Basen, der Salze mit organischen oder anorganischen Säuren oder in quaternierter Form und gegebenenfalls

(c) bis zu 20 Gew.-% anderen monoethylenisch ungesättigten Monomeren

in Wäßrigem Medium in Gegenwart von wasserlöslichen Proteinen oder teilweise abgebauten Proteinen in Gegenwart von Radikalen bildenden Initiatoren polymerisiert, wobei man pro 100 Gewichtsteile der Monomeren 0,5 bis 400 Gewichtsteile der Proteine einsetzt,
erhältlich sind.

## Claims

1. The use of copolymers obtainable by free-radically initiated copolymerization of monomer mixtures comprising

(a) 60-99% by weight of 1-vinylpyrrolidone, 1-vinylimidazole or mixtures thereof,
(b) 1-40% by weight of N,N'-dialkylaminoalkyl (meth)acrylates, N,N'-dialkylaminoalkyl(meth)acrylamides, 4-vinylpyridine, 2-vinylpyridine and/or diallyldialkylamines, each in the form of the free bases, in the form of a salt or in quaternized form, and/or 1-vinylimidazolium compounds of the formula

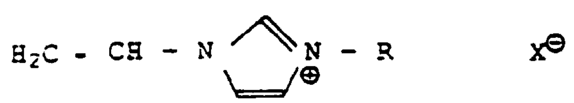

(I)

where R is $C_1$-$C_{18}$-alkyl or benzyl and $X^{\ominus}$ is an anion, and optionally
(c) up to 20% by weight of other monoethylenically unsaturated monomers,

as detergent additives for inhibiting dye transfer during the wash.

2. Polymers obtainable by free-radically initiated polymerization of

(a) 1-vinylpyrrolidone, 1-vinylimidazole, 1-vinylimidazolium compounds of the formula

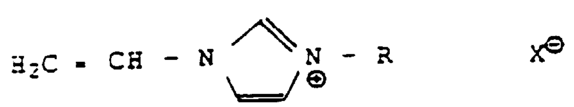

(I)

where R is hydrogen, $C_1$-$C_{18}$-alkyl or benzyl and $X^{\ominus}$ is an anion, or mixtures thereof, and
(b) other nitrogen-containing, basic ethylenically unsaturated monomers in the form of the free bases, in the form of the salts with organic or inorganic acids or in quaternized form, and/or
(c) other monoethylenically unsaturated monomers which are copolymerizable with the monomers (a) and (b),

in an aqueous medium in the presence of water-soluble proteins or partially degraded proteins using from 0.5 to 400 parts by weight of protein per 100 parts by weight of monomer used in the polymerization.

3. A process for preparing the polymers of claim 2, which comprises polymerizing the monomers

(a) 1-vinylpyrrolidone, 1-vinylimidazole, 1-vinylimidazolium compounds of the formula

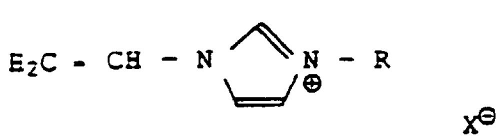

(I)

where R is hydrogen, $C_1$-$C_{18}$-alkyl or benzyl and $X^{\ominus}$ is an anion, or mixtures thereof, and
(b) other nitrogen-containing, basic ethylenically unsaturated monomers in the form of the free bases, in the form of the salts with organic or inorganic acids or in quaternized form, and/or
(c) other monoethylenically unsaturated monomers which are copolymerizable with the monomers (a) and (b),

in an aqueous medium in the presence of water-soluble or partially degraded proteins in the presence of free-

radical initiators using from 0.5 to 400 parts by weight of protein per 100 parts by weight of monomer.

**4.** A process as claimed in claim 3, wherein monomer (b) comprises N,N'-dialkylaminoalkyl (meth) acrylates and/or N,N'-dialkylaminoalkyl(meth)acrylamides.

**5.** The use of the polymers of claim 2 as detergent additives for inhibiting dye transfer during the wash.

**6.** Detergents based on surfactants with or without builders and other customary constituents, comprising from 0.1 to 10% by weight of copolymers obtainable by free-radically initiated copolymerization of monomer mixtures comprising

(a) 60-99% by weight of 1-vinylpyrrolidone, 1-vinylimidazole or mixtures thereof,
(b) 1-40% by weight of nitrogen-containing, basic ethylenically unsaturated monomers in the form of the free bases, in the form of the salts with organic or inorganic acids or in quaternized form, and optionally
(c) up to 20% by weight of other monoethylenically unsaturated monomers

in an aqueous medium in the presence of water-soluble proteins or partially degraded proteins in the presence of free radical initiators using from 0.5 to 400 parts by weight of protein per 100 parts by weight of monomer.

## Revendications

**1.** Utilisation de copolymères qui sont obtenus par copolymérisation radicalaire de mélanges de monomères composés de

a) 60 à 99% en poids de 1-vinylpyrrolidone, de 1-vinylimidazole ou de leurs mélanges,
b) 1 à 40% en poids de (méth)acrylates de N,N'-dialkylaminoalkyle, de N,N'-dialkylaminoalkyl(méth)acrylamides, de 4-vinylpyridine, de 2-vinylpyridine et/ou de diallyldialkylamines, chaque fois sous forme de bases libres, à l'état de sel ou sous forme quaternisée, et/ou de composés de 1-vinylimidazolium de formule

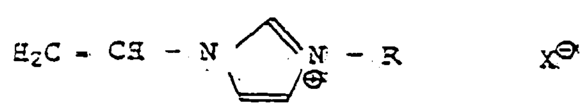 (I)

dans laquelle R = reste alkyle en $C_1$-$C_{18}$ ou benzyle et $X^{\ominus}$ est un anion, et éventuellement
c) jusqu'à 20% en poids d'autres monomères à insaturation monoéthylénique,

comme additif à des produits de lavage pour l'inhibition du transfert de colorants au cours de l'opération de lavage.

**2.** Polymères qui sont obtenus par polymérisation radicalaire de

a) 1-vinylpyrrolidone, 1-vinylimidazole, composés de 1-vinylimidazolium de formule

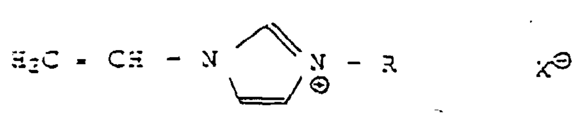 (I),

dans laquelle R = reste alkyle en $C_1$-$C_{18}$ ou benzyle et $X^{\ominus}$ est un anion, ou de leurs mélanges, et
b) autres monomères à insaturation éthylénique, basiques et azotés, sous forme des bases libres, des sels avec des acides organiques ou inorganiques ou sous forme quaternisée et/ou
c) autres monomères à insaturation monoéthylénique qui sont copolymérisables avec les monomères (a) et (b),

en milieu aqueux en présence de protéines hydrosolubles ou de protéines partiellement dégradées, avec utilisation

de 0,5 à 400 parties en poids des protéines pour 100 parties en poids des monomères mis en réaction dans la polymérisation.

**3.** Procédé de préparation de polymères selon la revendication 2, caractérisé en ce que l'on polymérise en présence d'amorceurs formant des radicaux

a) de la 1-vinylpyrrolidone, du 1-vinylimidazole, des composés de 1-vinylimidazolium de formule

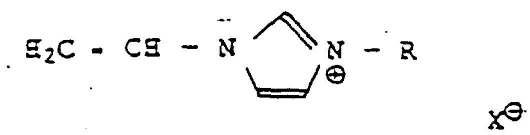

(I),

dans laquelle R = reste alkyle en $C_1$-$C_{18}$ ou benzyle et $X^\ominus$ est un anion, ou leurs mélanges, et
b) d'autres monomères à insaturation éthylénique, basiques et azotés, sous forme des bases libres, des sels avec des acides organiques ou inorganiques ou sous forme quaternisée et/ou
c) d'autres monomères à insaturation monoéthylénique qui sont copolymérisables avec les monomères (a) et (b),

en milieu aqueux en présence de protéines hydrosolubles ou de protéines partiellement dégradées, avec utilisation de 0,5 à 400 parties en poids des protéines pour 100 parties en poids des monomères mis en réaction dans la polymérisation.

**4.** Procédé selon la revendication 3, caractérisé en ce que l'on utilise, comme monomères (b), des (méth)acrylates de N,N'-dialkylaminoalkyle et/ou des N,N'-dialkylaminoalkyl(méth)acrylamides.

**5.** Utilisation des polymères selon la revendication 2 comme additif à des produits de lavage pour l'inhibition du transfert de colorants au cours de l'opération de lavage.

**6.** Produits de lavage à base de tensio-actifs et éventuellement d'adjuvants, ainsi que d'autres constituants usuels, caractérisés en ce qu'ils contiennent de 0,1 à 10% en poids de copolymères qui sont obtenus par copolymérisation radicalaire, en présence d'amorceurs formant des radicaux, de mélanges de monomères composés de

a) 60 à 99% en poids de 1-vinylpyrrolidone, de 1-vinylimidazole ou de leurs mélanges,
b) 1 à 40% en poids de monomères à insaturation éthylénique, basiques et azotés, sous forme des bases libres, des sels avec des acides organiques ou inorganiques ou sous forme quaternisée et éventuellement
c) jusqu'à 20% en poids d'autres monomères à insaturation monoéthylénique,

en milieu aqueux en présence de protéines hydrosolubles ou de protéines partiellement dégradées, avec utilisation de 0,5 à 400 parties en poids des protéines pour 100 parties en poids des monomères mis en réaction dans la polymérisation.